# EUROPÄISCHE PATENTSCHRIFT

(11) **EP 1 759 905 B1**
(45) Veröffentlichungstag und Bekanntmachung des Hinweises auf die Patenterteilung: **04.04.2012**
(21) Anmeldenummer: 06014526.5
(22) Anmeldetag: 13.07.2006
(51) Int. Cl.: B60J 7/20

(54) **Cabriolet-Fahrzeug mit einem in einem Verdeckablageraum ablegbaren Verdeck**
Cabriolet vehicle with stowable cover
Véhicule à toit ouvrant escamotable

(30) Priorität: 29.08.2005 DE 102005040814
(43) Veröffentlichungstag der Anmeldung: 07.03.2007
(73) Patentinhaber: Wilhelm Karmann GmbH, 49084 Osnabrück (DE)
(72) Erfinder: Thönelt, Ralf, 49143 Bissendorf (DE); van Berkum, Wim, 49179 Ostercappeln (DE)
(74) Vertreter: Kronthaler, Schmidt & Coll.

(56) Entgegenhaltungen:
- EP-A- 0 356 640
- EP-A- 1 228 914
- DE-A1- 10 131 886
- DE-A1- 19 723 328
- DE-A1- 19 834 850
- DE-C1- 19 541 168
- DE-C1- 19 542 906
- DE-C1- 19 713 606
- DE-U1- 29 809 006

## Beschreibung

Die Erfindung betrifft ein Cabriolet-Fahrzeug mit einem in einem Verdeckablageraum ablegbaren Verdeck.

In der EP 1 078 798 A2, von der im Oberbegriff des Anspruchs 1 ausgegangen wird, ist ein Cabriolet-Fahrzeug beschrieben, bei dem eine den Verdeckablageraum vom Gepäckraum abtrennende Trennvorrichtung ein in sich starres Klappenteil und ein zumindest teilweise aus flexiblem Material bestehendes Bodenteil aufweist, das an seinem Vorderrand mit einem fahrzeugfest gelagerten Schwenkarm verbunden ist. Zum Bewegen der Trennvorrichtung aus der Verdeckaufnahmestellung in die Gepäckaufnahmestellung und umgekehrt müssen der Schwenkarm und das Klappenteil einzeln verschwenkt werden und in den jeweiligen Endstellungen verriegelt werden, was verhältnismäßig aufwendig ist.

Aus der DE 298 09 006 U1 ist ein Cabriolet-Fahrzeug mit einem in einem Verdeckkasten ablegbaren Verdeck bekannt, wobei der Verdeckkasten durch eine Trennvorrichtung von einem Kofferraum abteilt ist. Die Trennvorrichtung umfasst eine sich horizontal erstreckende Bodenplatte, welche zwischen einer oberen und einer unteren Endstellung beweglich ist. Ein vorderes Ende der Bodenplatte ist in einer Führungsbahn gelagert und über eine Zwangsführung zwischen der oberen und der unteren Endstellung verlagerbar. In einem rückwärtigen Bereich der Bodenplatte ist diese schwenkbar mit einer weiteren Platte verbunden, welche schwenkbar an einem den Verdeckkasten rückseitig begrenzenden Querprofil festgelegt ist.

Der Erfindung liegt die Aufgabe zugrunde, ein gattungsgemäßes Cabriolet-Fahrzeug dahingehend weiterzuentwickeln, dass bei einfachem Aufbau der Trennvorrichtung diese in einfacher Weise zwischen der Gepäckaufnahmestellung und der Verdeckaufnahmestellung hin- und herbewegbar ist.

Diese Aufgabe wird mit den Merkmalen des Anspruchs 1 gelöst.

Bei dem erfindungsgemäßen Cabriolet-Fahrzeug, bei dem das Bodenteil und das Klappenteil als in sich starre, einfache Bauteile ausgebildet sind, die scharnierartig miteinander verbunden sind, ist die Bewegung des Vorderrandes des Bodenteils mit der Schwenkbewegung des Klappenteils zwangsgekoppelt, so dass die Bedienung zum Bewegen der Trennvorrichtung von der Verdeckaufnahmestellung in die Gepäckaufnahmestellung und umgekehrt sehr einfach ist. Zusätzlich kann die Bedienung in einfacher Weise motorisiert und dadurch in eine insgesamt motorische Verdeckbetätigung integriert werden.

Die Unteransprüche sind auf vorteilhafte Ausführungsformen und Weiterbildungen des erfindungsgemäßen Cabriolet-Fahrzeugs gerichtet.

Die Erfindung, die für alle Arten von Cabriolet-Fahrzeugen eingesetzt werden kann, bei denen das Verdeck in einem Verdeckablageraum bzw. -fach abgelegt wird, wird im Folgenden anhand schematischer Zeichnungen beispielsweise und mit weiteren Einzelheiten erläutert.

In den Figuren stellen dar:
- Fig. 1: eine Seitenansicht, teilweise im Schnitt, der Trennvorrichtung in Verdeckaufnahmestellung,
- Fig. 2: eine Ansicht ähnlich der Figur 1 der Trennvorrichtung in Gepäckaufnahmestellung,
- Fig. 3: eine perspektivische Teilansicht auf den Heckbereich eines Cabriolet-Fahrzeugs mit der Trennvorrichtung in Verdeckaufnahmestellung und
- Fig. 4: eine Ansicht ähnlich der Figur 3 mit der Trennvorrichtung in Gepäckaufnahmestellung.

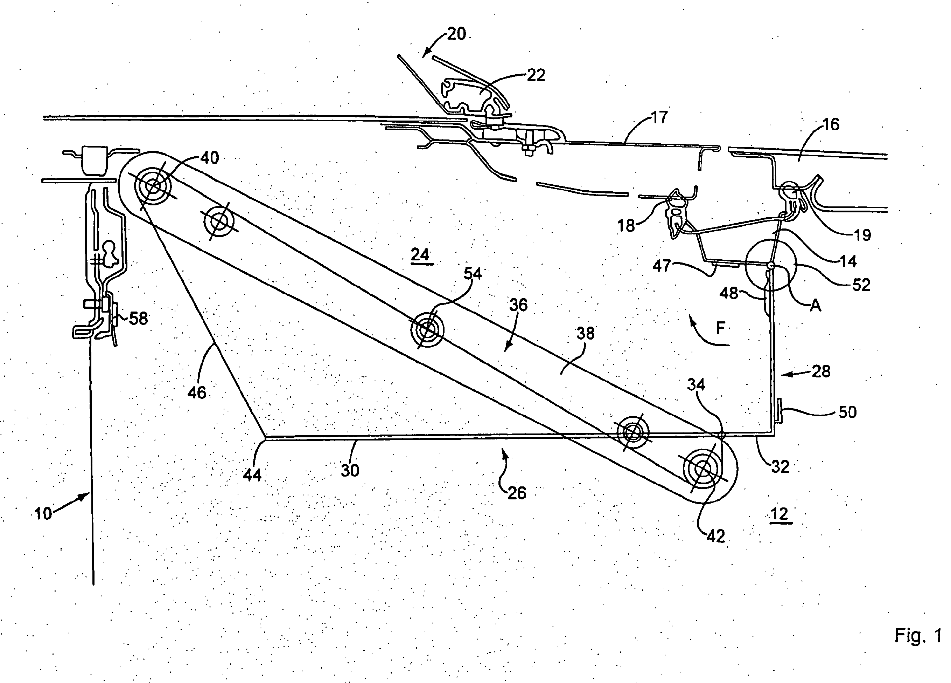

Figur 1 zeigt aus einer geschnittenen Längsmittelebene eines Cabriolet-Fahrzeugs heraus eine Ansicht auf die bezüglich der Fahrzeuglängsrichtung rechte Seite des Fahrzeugs im Bereich des Verdeckablageraums.

Das Bezugszeichen 10 bezeichnet eine Trennwand, die einen Fahrzeuginnenraum von einem insgesamt mit 12 bezeichneten Gepäckraum im Heck des Fahrzeugs abtrennt. 14 bezeichnet einen über dem Gepäckraum verlaufenden Querholm, der zur Fahrzeugstruktur gehört. Beidseitig an der Fahrzeugstruktur ist eine Heck- bzw. Gepäckklappe 16 gelagert, die in Gegenuhrzeigerrichtung aufschwenkbar ist. Bezogen auf die Fahrzeuglängsrichtung vor der Gepäckklappe 16 ist beidseitig an der Fahrzeugstruktur eine Verdeckklappe 17 gelagert. Die Gepäckklappe 16 und Verdeckklappe 17 liegen in geschlossenem Zustand über Dichtungen 18, 19 an dem Querholm 14 an, so dass dessen Oberseite eine Wasserauffangrinne bildet.

Ein am hinteren unteren Rand des Verdecks 20 angeordneter Spannbügel 22 ist beidseitig an der Fahrzeugstruktur um eine Achse, die beispielsweise im Bereich der Trennwand 10 verläuft, schwenkbar gelagert.

Der Aufbau und die Betätigung des Verdecks 20 sind an sich bekannt und werden daher nicht im Einzelnen erläutert. Zum Öffnen des Verdecks wird der Spannbügel 22 zunächst in Gegenuhrzeigerrichtung aufwärts verschwenkt, bis die Verdeckklappe 17 in Uhrzeigerrichtung aufwärts verschwenkbar ist, so dass das Verdeck insgesamt in einen Verdeckablageraum 24 ablegbar ist, der nach oben hin durch die dann wieder in die dargestellte Schließstellung zurückgeschwenkte Verdeckklappe 17 geschlossen ist.

Um das in dem Verdeckablageraum 24 abgelegte Verdeck (nicht dargestellt) vor im Gepäckraum 12 befindlichem Gepäck zu schützen, ist eine insgesamt mit 26 bezeichnete Trennvorrichtung vorgesehen, zu der ein im Querschnitt insgesamt L-förmiges Klappenteil 28 und ein als ebene, in sich starre Platte ausgebildetes Bodenteil 30 gehören.

Das Klappenteil 28, das beispielsweise als in sich starres Kunststoffformteil ausgebildet ist, ist an einem Rand um eine Achse A schwenkbar an dem Querholm 14 an dessen hinterem, unterem Bereich gelagert. In der dargestellten Verdeckaufnahmestellung ist das Klappenteil 28 etwa senkrecht nach unten verschwenkt, so dass sein abgebogener Stegbereich 32 etwa in Vorwärtsrichtung des Fahrzeugs zeigt.

Mit dem freien Ende des Stegbereichs 32 ist über ein oder mehrere gleichachsig angeordnete Scharniergelenke 34 das Bodenteil 30 gelenkig bzw. schwenkbar verbunden.

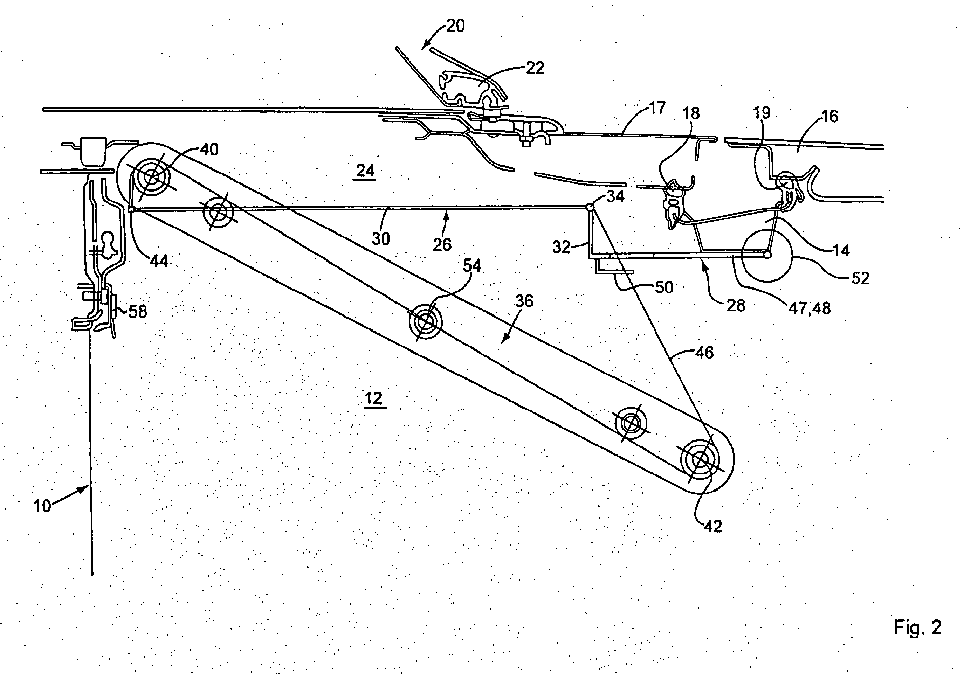

Zur Steuerung der Bewegung insbesondere des Bodenteils 30 ist ein insgesamt mit 36 bezeichneter Mechanismus vorgesehen, der vorzugsweise an beiden Fahrzeugseiten spiegelsymmetrisch zueinander angebracht ist. Der Mechanismus 36 enthält einen an der Fahrzeugseitenstruktur starr befestigten Träger 38, an dem zwei Umlenkrollen 40 und 42 drehbar gelagert sind. Die Umlenkrolle 40 befindet sich an einer Stelle, die vorzugsweise in kurzem Abstand über der Stelle ist, die der Vorderrand 44 des Bodenteils 30 in der Gepäckaufnahmestellung der Trennvorrichtung 26 (Figur 2) haben soll. Die andere Umlenkrolle 42 befindet sich an einer Stelle in kurzem Abstand unterhalb der Stelle, die das oder die Scharniergelenke 34 in der Verdeckaufnahmestellung (Figur 1) der Trennvorrichtung 26 hat.

Vom Vorderrand 44 des Bodenteils 30 führt ein Seil 46, vorzugsweise ein Stahlseil, über die Umlenkrolle 40 und anschließend über die Umlenkrolle 42 zu dem Verbindungsbereich zwischen dem Bodenteil 30 und dem Klappenteil 28 und ist dort unmittelbar am Stegbereich 32 oder an dem Bodenteil 30 oder einem Scharniergelenk 34 befestigt. Die Länge des Seils 46 ist derart bemessen, dass sich das Bodenteil 30 in der Verdeckaufnahmestellung gemäß Figur 1 in der der Verdeckablageraum 24 maximal ist, in einer etwa waagerechten Stellung befindet.

Wenn das Klappenteil 28 aus der Stellung gemäß Figur 1 in Richtung des Pfeils F in Uhrzeigerrichtung verschwenkt wird, wird das Seil 46 um die Umlenkrolle 42 gezogen und läuft entsprechend um die Umlenkrolle 40, so dass sich die Länge des zwischen der Umlenkrolle 40 und dem Vorderrand 44 des Bodenteils 30 befindliche Seillänge verkürzt und der Vorderrand 44 aufwärts und in Vorwärtsrichtung des Fahrzeugs bewegt wird. Nach vollständigem Verschwenken des Klappenteils 28 in Anlage an die Unterseite des Querholms 14 befinden sich das Klappenteil 28 und das Bodenteil 30 in der Gepäckaufnahmestellung gemäß Figur 2, in der der vom Gepäckraum 12 abgetrennte Verdeckablageraum 24 minimal ist.

Das Klappenteil 28 wird in der Stellung der Figur 2 beispielsweise dadurch gehalten, dass an der Unterseite des Querholms 14 und der entsprechenden Gegenfläche des Klappenteils 28 Klettbänder 47, 48 vorgesehen sind.

Die Betätigung der Trennvorrichtung 26 bzw. das Verschwenken des Klappenteils 28 kann manuell erfolgen, wofür an dem Klappenteil 28 ein Handgriff 50 vorgesehen ist. Der Handgriff 50 kann derart ausgebildet sein, dass er vom Heck des Fahrzeugs her und/oder vom Verdeckablageraum her erfasst werden kann. Um von beiden Seiten her erfasst zu werden, ist er beispielsweise als ein Durchbruch durch das Klappenteil 28 ausgebildet. Andernfalls kann der Handgriff 50 als eine entsprechende Griffschale ausgebildet sein. Das Aufwärtsschwenken des Klappenteils 28 bzw. das Anheben der gesamten Trennvorrichtung 26 kann mittels einer Torsionsfeder 52 unterstützt werden, die das Klappenteil 28 in Richtung der Gepäckaufnahmestellung vorspannt.

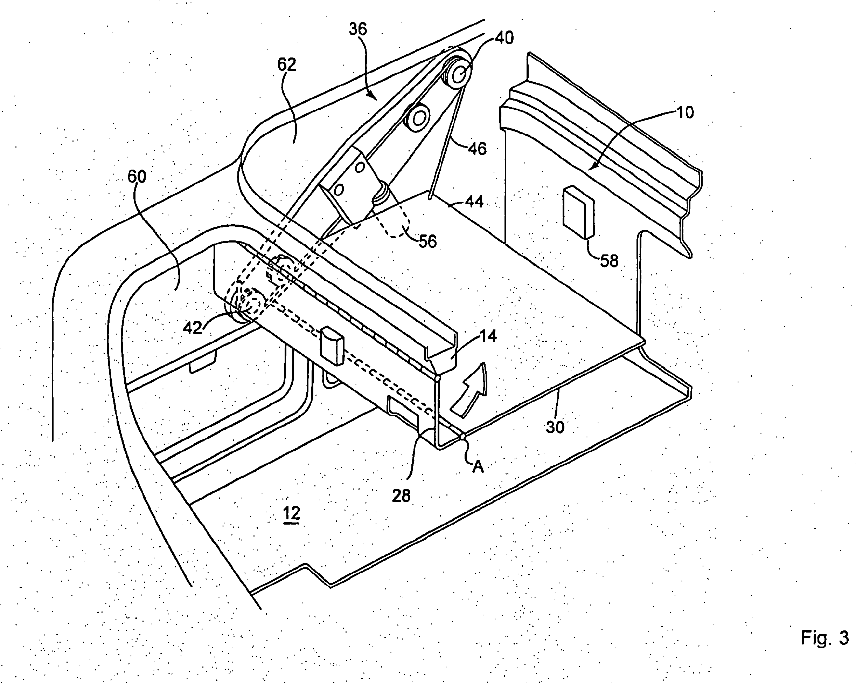

Zur motorischen Betätigung der Trennvorrichtung 26 kann das Seil 46 um eine Seilrolle 54 laufen, die beispielsweise von einem Elektromotor 56 (Figur 3) drehangetrieben ist und bei ihrer Drehung das Seil 46 bewegt. Die Betätigung des Elektromotors 56 kann beispielsweise über manuell betätige Schalter erfolgen oder in den Ablauf der Verdecköffnung und des Verdeckschließens insgesamt integriert sein.

Damit beim Absenken der Trennvorrichtung 26 keine Kollision mit in dem Gepäckraum 12 befindlichen Gegenständen erfolgt, kann eine Sensoreinrichtung vorgesehen sein, die beispielsweise ein oder mehrere Ultraschallsensoren 58 umfasst und den von dem Klappenteil 28 und dem Bodenteil 30 bei der Bewegung der Trennvorrichtung aus der Gepäckaufnahmestellung in die Verdeckaufnahmestellung überstrichenen Raum abtastet.

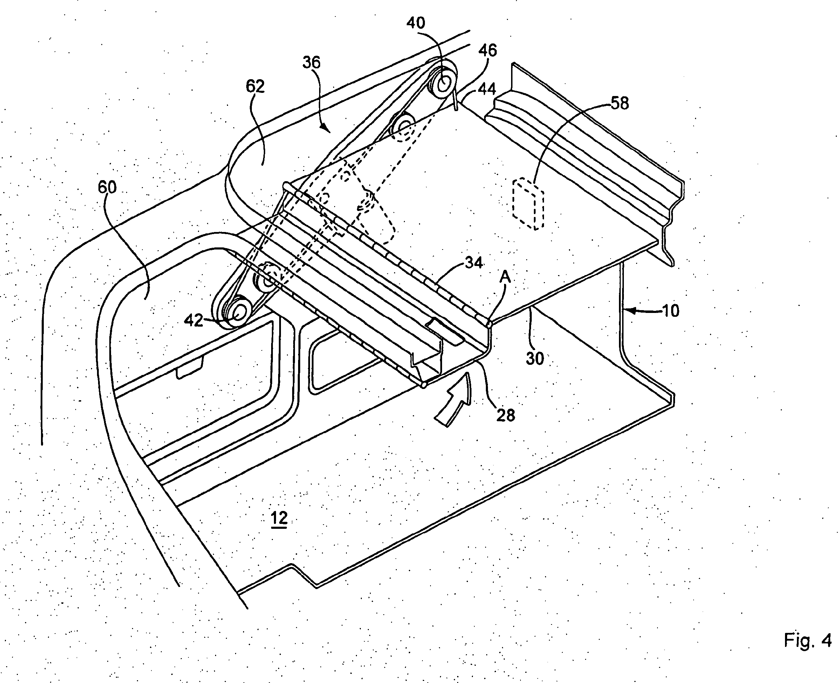

Die Figuren 3 und 4 zeigen in perspektivischer Teildarstellung den linksseitigen Mechanismus 36 in Durchsicht durch den Querholm 14 hindurch. Eine normalerweise durch die Gepäckklappe verschlossene Öffnung ist mit 60 bezeichnet. Eine durch die Verdeckklappe 17 normalerweise verschlossene Öffnung ist mit 62 bezeichnet. Figur 3 zeigt die Anordnung in der Verdeckaufnahmestellung der Trennvorrichtung. Figur 4 zeigt die Anordnung in Gepäckaufnahmestellung. Wie aus den Figuren insgesamt ersichtlich, befindet sich der Vorderrand 44 des Bodenteils 30 in der Verdeckaufnahmestellung unterhalb und hinter der Stellung, in der sich der Vorderrand 44 in der Gepäckaufnahmestellung befindet. Die Bewegungskomponente des Vorderrandes 44 in Fahrzeuglängsrichtung ist durch den Abstand zwischen dem oder den Scharniergelenken 34 und der Schwenkachse A gegeben.

Die beschriebene Vorrichtung kann in vielfältiger Weise abgeändert werden. Beispielsweise kann die Zwangskupplung zwischen der Bewegung des Vorderrandes 44 des Bodenteils 30 und der Verschwenkung des Klappenteils 28 durch einen Hebelmechanismus bewirkt werden. Die Verrieglung und Entriegelung der Trennvorrichtung in der Gepäckaufnahmestellung kann durch eine federnde Rasteinrichtung erfolgen. Das Bodenteil 30 muss nicht als ebene Platte ausgebildet sein, sondern kann zur Steifigkeitsverbesserung verrippt und/oder derart konturiert sein, dass es in der angehobenen Gepäckaufnahmestellung an die Unterseite der Verdeckklappe angepasst ist.

### BEZUGSZEICHENLISTE

- 10: Trennwand
- 12: Gepäckraum
- 14: Querholm
- 16: Gepäckklappe
- 17: Verdeckklappe
- 18: Dichtung
- 19: Dichtung
- 20: Verdeck
- 22: Spannbügel
- 24: Verdeckablageraum
- 26: Trennvorrichtung
- 28: Klappenteil
- 30: Bodenteil
- 32: Stegbereich
- 34: Scharniergelenk
- 36: Mechanismus
- 38: Träger
- 40: Unlenkrolle
- 42: Umlenkrolle
- 44: Vorderrand
- 46: Seil
- 47: Klettband
- 48: Klettband
- 50: Handhabe
- 52: Torsionsfeder
- 54: Seilrolle
- 56: Elektromotor
- 58: Ultraschallsensoren
- 60: Öffnung
- 62: Öffnung
- A: Achse

## Patentansprüche

1. Cabriolet-Fahrzeug mit einem in einem Verdeckablageraum (24) ablegbaren Verdeck, welcher Verdeckablageraum durch eine Trennvorrichtung (26) von einem vorderen, oberen Bereich eines im Heck des Fahrzeugs angeordneten Gepäckraums (12) getrennt ist, wobei die Trennvorrichtung ein Bodenteil (30) und ein mit einem Hinterrand des Bodenteils gelenkig verbundenes, in sich starres Klappenteil (28) aufweist, das an seinem vom Hinterrand des Bodenteils abgewandten Rand um eine im hinteren, oberen Bereich des Verdeckablageraums angeordnete, quer zur Fahrzeuglängsrichtung verlaufende Achse (A) schwenkbar an der Fahrzeugstruktur gelagert ist, und die Trennvorrichtung zwischen einer Verdeckaufnahmestellung, in der das geöffnete Verdeck in dem Verdeckablageraum ablegbar ist, und einer Gepäckaufnahmestellung bewegbar ist, in der das Gepäckraumvolumen durch Anheben des Bodenteils und Aufwärtsschwenken des Klappenteils maximal ist, wobei der vordere Rand des Bodenteils von einem an der Fahrzeugstruktur angebrachten Mechanismus in der abgesenkten Verdeckaufnahmestellung und der angehobenen Gepäckaufnahmestellung gehalten und zwischen den beiden Stellungen bewegbar ist, und wobei das Bodenteil (30) in sich starr ist und der Mechanismus (36) die Schwenkbewegung des Klappenteils (28) mit der Bewegung des Vorderrandes (44) des Bodenteils koppelt, so dass sich der Vorderrand des Bodenteils in der Verdeckaufnahmestellung in einer Stellung unterhalb und hinter der Stellung befindet, die der Vorderrand in der Gepäckaufnahmestellung einnimmt, **dadurch gekennzeichnet, dass**
der Mechanismus (36) ein Seil (46) enthält, dessen eines Ende am Vorderrand (44) des Bodenteils (30) und dessen anderes Ende an der Trennvorrichtung (26) im Bereich der gelenkigen Verbindung (34) zwischen dem Bodenteil (30) und dem Klappenteil (28) befestigt ist und das um fahrzeugfeste Umlenkbauteile (40, 42) derart geführt ist, dass bei einem Absenken oder Anheben des Vorderrandes des Bodenteils gleichzeitig dessen Hinterrand abgesenkt oder angehoben wird.

2. Cabriolet-Fahrzeug nach Anspruch 1,
**dadurch gekennzeichnet, dass**
ein erstes Umlenkbauteil (40) in kurzem Abstand oberhalb der Stelle angeordnet ist, die der Vorderrand (44) des Bodenteils (30) in der Gepäckaufnahmestellung einnimmt, ein zweites Umlenkbauteil (42) kurz unterhalb der Stelle angeordnet ist, die der Hinterrand des Bodenteils in der Verdeckaufnahmestellung einnimmt und das Seil (46) vom Vorderrand des Bodenteils um das erste Umlenkteil und anschließend um das zweite Umlenkteil zum Hinterrand des Bodenteils geführt ist.

3. Cabriolet-Fahrzeug nach Anspruch 1 oder 2,
**dadurch gekennzeichnet, dass**
das Seil (46) um eine drehantreibbare Rolle (54) geführt ist.

4. Cabriolet-Fahrzeug nach einem der Ansprüche 1 bis 3,
**dadurch gekennzeichnet, dass**
an der Trennvorrichtung (26) ein Handgriff (50) zum manuellen Bewegen der Trennvorrichtung in die Gepäckaufnahmestellung und/oder die Verdeckaufnahmestellung vorgesehen ist.

5. Cabriolet-Fahrzeug nach einem der Ansprüche 1 bis 4,
**dadurch gekennzeichnet, dass**
das Klappenteil (28) in die Gepäckaufnahmestellung elastisch vorgespannt ist.

6. Cabriolet-Fahrzeug nach einem der Ansprüche 1 bis 5,
**dadurch gekennzeichnet, dass**
das Bodenteil (30) eine insgesamt ebene Platte ist.

7. Cabriolet-Fahrzeug nach einem der Ansprüche 1 bis 5,
**dadurch gekennzeichnet, dass**
das Bodenteil (30) durch eine konturierte Platte gebildet ist.

8. Cabriolet-Fahrzeug nach einem der Ansprüche 1 bis 7,
**dadurch gekennzeichnet, dass**
das Klappenteil (28) an einem hinteren, unteren Bereich eines Querholms (14) der Fahrzeugstruktur gelagert ist und im Querschnitt insgesamt L-förmig gebogen ist, so dass es in der Gepäckaufnahmestellung in Anlage an dem Querholm ist und sich der mit ihm gelenkig verbundene Hinterrand des Bodenteils (30) auf einem Niveau oberhalb der Unterseite des Querholms befindet.

9. Cabriolet-Fahrzeug nach Anspruch 8,
**dadurch gekennzeichnet, dass**
eine Halterung (47, 48) zum lösbaren Halten des Klappenteils (28) in der Gepäckaufnahmestellung vorgesehen ist.

10. Cabriolet-Fahrzeug nach einem der Ansprüche 1 bis 9,
**dadurch gekennzeichnet, dass**
eine Sensoreinrichtung (58) zum Prüfen des von der Trennvorrichtung (26) beim Bewegen von der Gepäckaufnahmestellung in die Verdeckaufnahmestellung überstrichenen Raums auf Hindernisse vorgesehen ist.

## Claims

1. A convertible vehicle, comprising a hood which can be stowed in a hood storage compartment (24), which hood storage compartment is separated by a separating device (26) from a front, upper region of a luggage compartment (12) arranged at the rear of the vehicle, said separating device comprising a base part (30) and an inherently rigid flap part (28) articulated to a rear edge of the base part, said flap part (28) being supported, by its edge facing away from the rear edge of the base part, on the vehicle structure so as to pivot around an axis (A) which is disposed in the rear, upper region of the hood storage compartment and extends transversely to the longitudinal vehicle direction, and said separating device being movable between a hood-receiving position, in which the opened hood can be stowed in the hood storage compartment, and a luggage-receiving position, in which the luggage compartment reaches its maximum volume by lifting the base part and swinging the flap part up, the front edge of the base part being held in the lowered hood-receiving position and in the raised luggage-receiving position by a mechanism mounted to the vehicle structure and being movable between both positions, and the base part (30) being inherently rigid and the mechanism (36) coupling the pivoting movement of the flap part (28) with the movement of the front edge (44) of the base part such that the front edge of the base part, when in the hood-receiving position, is located in a position below and behind the position which the front edge occupies in the luggage-receiving position,
**characterised in that**
the mechanism (36) includes a rope (46) whose one end is fixed to the front edge (44) of the base part (30) and whose other end is fixed to the separating device (26) in the region of the articulated joint (34) between the base part (30) and the flap part (28) and which is guided around vehicle-mounted deflection components (40, 42) such that lowering or raising the front edge of the base part causes its rear edge to be lowered or raised at the same time.

2. The convertible vehicle according to claim 1, **characterised in that** a first deflection component (40) is arranged a short distance above the location which the front edge (44) of the base part (30) occupies in the luggage-receiving position, a second deflection component (42) is arranged a short distance below the location which the rear edge of the base part occupies in the hood-receiving position, and the rope (46) is guided from the front edge of the base part, around the first deflection component and then around the second deflection component, to the rear edge of the base part.

3. The convertible vehicle according to claim 1 or 2, **characterised in that** the rope (46) is guided around a rotatable roller (54).

4. The convertible vehicle according to any one of claims 1 to 3, **characterised in that** a handle (50) for manually moving the separating device into the luggage-receiving position and/or the hood-receiving position is provided on the separating device (26).

5. The convertible vehicle according to any one of claims 1 to 4, **characterised in that** the flap part (28) is elastically biased towards the luggage-receiving position.

6. The convertible vehicle according to any one of claims 1 to 5, **characterised in that** the base part (30) is a generally level plate.

7. The convertible vehicle according to any one of claims 1 to 5, **characterised in that** the base part (30) is formed by a contoured plate.

8. The convertible vehicle according to any one of claims 1 to 7, **characterised in that** the flap part (28) is supported on a rear, lower region of a cross-strut (14) of the vehicle structure and is bent to be generally L-shaped in cross-section, so that it contacts the cross-strut in the luggage-receiving position and the rear edge of the base part (30), which is articulated to it, is located at a level above the bottom surface of the cross-strut.

9. The convertible vehicle according to claim 8, **characterised in that** a holder (47, 48) for releasably holding the flap part (28) in the luggage-receiving position is provided.

10. The convertible vehicle according to any one of claims 1 to 9, **characterised in that** a sensor means (58) is provided to detect any obstacles in the space swept by the separating device (26) moving from the luggage-receiving position to the hood-receiving position.

## Revendications

1. Véhicule cabriolet, équipé d'une capote pouvant être déposée dans un espace de dépose de capote (24), lequel espace de dépose de capote est séparé par un dispositif de séparation (26) d'une zone avant supérieure d'un coffre à bagages (12) disposé à l'arrière du véhicule, ledit dispositif de séparation comprenant une partie de fond (30) et une partie de volet (28), rigide en soi et articulée sur un bord arrière de la partie de fond, ladite partie de volet (28) étant supportée, par son bord détourné du bord arrière de la partie de fond, sur la structure du véhicule de manière à basculer autour d'un axe (A) disposé dans la zone arrière supérieure de l'espace de dépose de capote et s'étendant transversalement à la direction longitudinale du véhicule, et ledit dispositif de séparation pouvant être déplacé entre une position de réception de capote permettant de déposer la capote ouverte dans l'espace de dépose de capote, et une position de réception de bagages, dans laquelle le volume du coffre à bagages est maximum à cause du levage de la partie de fond et du basculement de la partie de volet vers le haut, le bord avant de la partie de fond étant tenu dans la position abaissée de réception de capote et dans la position élevée de réception de bagages par un mécanisme monté à la structure du véhicule et ledit bord avant étant déplaçable entre les deux positions, et la partie de fond (30) étant rigide en soi et le mécanisme (36) combinant le basculement de la partie de volet (28) avec le mouvement du bord avant (44) de la partie de fond de manière à ce que le bord avant de la partie de fond, en position de réception de capote, soit disposé dans une position au-dessous et derrière la position que le bord avant occupe en position de réception de bagages,
**caractérisé en ce que**
le mécanisme (36) présente un câble (46) dont une extrémité est fixée au bord avant (44) de la partie de fond (30) et dont l'autre extrémité est fixée au dispositif de séparation (26) près du joint articulé (34) entre la partie de fond (30) et la partie de volet (28) et qui est guidé autour de composants de déviation (40, 42) montés fixe au véhicule, ce guidage s'effectuant de manière à ce qu'un abaissement ou un levage du bord avant de la partie de fond ait pour conséquence un abaissement ou levage simultané de son bord arrière.

2. Véhicule cabriolet selon la revendication 1, **caractérisé en ce qu'**un premier composant de déviation (40) est disposé à peu de distance au-dessus de la position que le bord avant (44) de la partie de fond (30) occupe en position de réception de bagages, **en ce qu'**un deuxième composant de déviation (42) est disposé à peu de distance au-dessous de la position que le bord arrière de la partie de fond occupe en position de réception de capote, et **en ce que** le câble (46) est guidé à partir du bord avant de la partie de fond, autour du premier composant de déviation et puis autour du deuxième composant de déviation, jusqu'au bord arrière de la partie de fond.

3. Véhicule cabriolet selon la revendication 1 ou 2, **caractérisé en ce que** le câble (46) est guidé autour d'un galet rotatif (54).

4. Véhicule cabriolet selon l'une quelconque des revendications 1 à 3, **caractérisé en ce qu'**une poignée (50) pour le déplacement manuel du dispositif de séparation vers la position de réception de bagages et/ou la position de réception de capote est disposée sur le dispositif de séparation (26).

5. Véhicule cabriolet selon l'une quelconque des revendications 1 à 4, **caractérisé en ce que** la partie de volet (28) est précontrainte élastiquement vers la position de réception de bagages.

6. Véhicule cabriolet selon l'une quelconque des revendications 1 à 5, **caractérisé en ce que** la partie de fond (30) est une plaque généralement plane.

7. Véhicule cabriolet selon l'une quelconque des revendications 1 à 5, **caractérisé en ce que** la partie de fond (30) est constituée par une plaque à contours.

8. Véhicule cabriolet selon l'une quelconque des revendications 1 à 7, **caractérisé en ce que** la partie de volet (28) est supportée sur une zone arrière inférieure d'une traverse (14) de la structure du véhicule et est pliée de manière à présenter une forme générale en L en section transversale, de sorte qu'elle prenne appui contre la traverse en position de réception de bagages, et le bord arrière de la partie de fond (30), articulé sur ladite partie de volet (28), soit disposé à un niveau au-dessus de la face inférieure de la traverse.

9. Véhicule cabriolet selon la revendication 8, **caractérisé en ce que** l'on prévoit un support (47, 48) pour tenir de manière libérable la partie de volet (28) dans la position de réception de bagages.

10. Véhicule cabriolet selon l'une quelconque des revendications 1 à 9, **caractérisé en ce que** l'on prévoit un dispositif détecteur (58) destiné à détecter des obstacles dans l'espace balayé par le dispositif de séparation (26) lors de son mouvement de la position de réception de bagages vers la position de réception de capote.
